Europäisches Patentamt

European Patent Office

Office européen des brevets

(19)

(11) Veröffentlichungsnummer: **0 192 042**
**A2**

(12) # EUROPÄISCHE PATENTANMELDUNG

(21) Anmeldenummer: 86100489.3

(22) Anmeldetag: 16.01.86

(51) Int. Cl.⁴: **F 02 F 11/00**
**F 16 F 15/10, F 16 J 15/12**

(30) Priorität: 18.02.85 DE 3505562

(43) Veröffentlichungstag der Anmeldung:
27.08.86 Patentblatt 86/35

(84) Benannte Vertragsstaaten:
DE FR GB IT SE

(71) Anmelder: GOETZE AG
Bürgermeister-Schmidt-Strasse 17
D-5093 Burscheid 1(DE)

(72) Erfinder: Zerfass, Hans-Rainer, Dr.
Finkenweg 8
D-5093 Burscheid(DE)

(72) Erfinder: Giesen, Franz-Josef
Am Alten Turm 1a
D-5068 Odenthal 3(DE)

(72) Erfinder: Majewski, Klaus-Peter, Dipl.-Ing.
Am Sportfeld 16
D-5093 Burscheid(DE)

(54) Weichstoffflachdichtung, insbesondere für Verbrennungskraftmaschinen.

(57) Bei einer aus einem gegebenenfalls metallisch verstärkten und imprägnierten Faservlies bestehenden Weichstoffflachdichtung, wie einer Zylinderkopfdichtung, einer Auspuffflanschdichtung oder einer Nebendichtung für Verbrennungskraftmaschinen, ist der das Kleben verhindernde Überzug aus einer Suspension mit 69,5 bis 93 Gewichtsteilen hoch viskosem Mineralöl, 0,5 bis 10 Gewichtsteilen eines wässrigen Latex, 5 bis 20 Gewichtsteilen PTFE-Pulver und 0,5 bis 2 Gewichtsteilen eines kationischen Tensids als Benetzungsmittel mit einem Flächengewicht von bis zu 200 g/m² aufgetragen. Trotz der bekanntermaßen schlechten Bindefähigkeit von PTFE-Materialien besitzen die so hergestellten Überzüge eine gute Haftung an der Dichtung, so daß die Dichtungen bei Handhabung nicht abfärben, bei längerem Lagern nicht ihre Antiklebeigenschaften verlieren und sofort nach dem Beschichten problemlos aufeinander stapelbar sind.

EP 0 192 042 A2

Croydon Printing Company Ltd.

- 1 -

Weichstoffflachdichtung, insbesondere für Verbrennungskraftmaschinen.

Die Erfindung betrifft eine Weichstoffflachdichtung, wie
insbesondere eine Zylinderkopfdichtung, eine Auspuffflanschabdichtung oder eine Nebenabdichtung in Verbrennungskraftmaschinen, bestehend aus gegebenenfalls metallisch verstärkten und imprägnierten Faservliesen, mit
einer ein- oder beidseitigen, ganz- oder teilflächigen
Beschichtung aus einem das Kleben an den Dichtflächen
verhindernden Material.

Nachteilig insbesondere bei Weichstoffflachdichtungen von
Verbrennungskraftmaschinen ist das Kleben der Dichtungen
an den abgedichteten Flanschflächen unter der Dichtpressungsdruck- und Temperaturbelastung im motorischen Betrieb.

Insbesondere bei einer Reparatur an der Verbrennungskraftmaschine, bei der die Dichtverbindungen gelöst werden, wird die Dichtung meist zerstört, und es bleiben
Teile davon an den Flanschflächen haften. Die klebenden
Teile müssen dann sorgfältig von den Flanschflächen entfernt werden, und in der Regel ist die alte Dichtung
nicht mehr verwendbar.

In der Dichtungstechnik ist es daher üblich, zur Vermeidung derartiger Schäden die Dichtungen ein- oder beidseitig, ganz- oder teilflächig mit dem Kleben entgegenwir-

- 2 -

kenden Überzügen zu versehen und so setzt man beispielsweise nach der US-PS 4.223.897 als Überzugsmaterialien der Dichtungen vor allem Silikonharze, Polysiloxane, Polytetrafluorethylenharze oder andere Stoffe mit niedrigem Reibungskoeffizienten ein. Problematisch allerdings ist bei Überzugsmaterialien mit geringem Reibungskoeffizienten deren schlechte Haftung an der Dichtung. So muß nach der US-PS 4.223.897 entweder im Oberflächenbereich als Faservlies der imprägnierten Flachdichtung eine imprägniermittelfreie Zone bestehen, damit sich die Deckschichten gut an den freiliegenden Fasern verankern können, oder die Oberflächen der imprägnierten Dichtungen müssen nach dem Vernetzen des Imprägniermittels angelöst und aufgeweicht werden, damit eine gute Bindung zwischen Dichtung und Deckschicht zutande kommt. Insbesondere aber wegen des relativ hohen Materialverbrauches von teuren Überzugsmaterialien und wegen der zusätzlichen aufwendigen Verfahrensschritte sind die so hergestellten Dichtungen insbesondere als Massenartikel zu kostspielig.

In der Dichtungstechnik ist es darüberhinaus auch seit langem üblich, Graphit in pulveriger bis feinkörniger Form als der Klebrigkeit entgegenwirkendes Material zu verwenden. Der Graphit wird dazu bevorzugt in einer Suspension mit einem wässrigen Latex verwendet, allerdings muß bei der Rezeptur der Suspension ein Kompromiß geschlossen werden. Zu hohe Anteile an Latex im Überzug machen die Antiklebeigenschaften des Graphits wirkungslos, die beschichteten Dichtungen kleben an den Dichtungsflächen der Verbrennungskraftmaschinen, und der ge-

- 3 -

wünschte Effekt wird nicht erreicht. Dieser Nachteil wird zwar durch die Verwendung geringerer Latexanteile behoben. Allerdings ist dann das Graphit nicht mehr ausreichend an die Dichtungsflächen gebunden, Graphit wird von den Dichtungsflächen abgegeben, und die Dichtungen färben ab. Die Dichtungen sind dadurch schwer handhabbar und verlieren sogar gegebenenfalls nach längerem Lagern ihre Antiklebeigenschaften.

Der vorliegenden Erfindung liegt daher die Aufgabe zugrunde, eine mit einer Antiklebschicht versehene Weichstoffflachdichtung für insbesondere Verbrennungskraftmaschinen zu schaffen, deren Beschichtung bei guten Antiklebeigenschaften gut ohne Abfärben handhabbar und zugleich einfach und kostensparend herzustellen ist.

Erfindungsgemäß wird diese Aufgabe durch eine Weichstoffflachdichtung mit einer Antiklebbeschichtung gelöst, welche aus einer Suspension von

5   bis 20 Gewichtsprozent feinpulverigem Polytetrafluorethylen (Korngröße kleiner als 5 μm)

69,5 bis 93 Gewichtsprozent eines Mineralöles (Flammpunkt größer als 230°C)

0,5 bis 10 Gewichtsprozent eines wässrigen Latex (40 %-ig)

0,5 bis  2 Gewichtsprozent eines kationischen Tensids als Benetzungsmittels

hergestellt ist.

- 4 -

Es wurde gefunden, daß die mit diesem Material beschichteten Weichstoffflachdichtungen etwa gleich gute Antiklebeigenschaften wie die bisherigen, mit Graphit-Latex-Suspensionen beschichteten Dichtungen besitzen. Vor allem aber ist die Bindung des PTFE-Pulvers an der Dichtung erstaunlicherweise trotz des geringen Latexanteiles im Überzugsmaterial und der bekannterweise schlechten Bindefähigkeit von PTFE-Werkstoffen nach dem Einziehen direkt nach dem Auftrag so gut, daß die Dichtungen unmittelbar nach dem Auftrag, ohne zu kleben, stapelbar sind und weder färben, noch ihre Antiklebeigenschaften nach längerem Lagern verlieren. Offensichtlich scheint der hohe Mineralölanteil unter Wirkung des zugegebenen Benetzungsmittels das Latex und die PTFE-Teilchen im Überzugsmaterial sowie die Fasern, die Bindemittel und gegebenenfalls das vernetzte Imprägniermittel im Faservlies bindefähig zu machen, so daß dann beim Einziehen des Überzugsmaterials die gute Bindung der beteiligten Partner untereinander entsteht.

Um optimale Schichtdicken der Antiklebbeschichtung zu erhalten, wird das Mittel mit einem Flächengewicht von bis zu 200 $g/m^2$ gegebenenfalls auch auf die Schnittflächen der Dichtung aufgetragen. Damit ferner die Auftragssuspensionsansätze längere Zeit ohne störende Entmischung haltbar sind, kann der Suspension bis zu 1 Gewichtsteil eines Antiabsetzmittels auf der Basis eines Schichtsilikats, wie insbesondere von Bentonit, zugegeben sein, und damit die Beschichtungen eine höhere Temperaturbeständigkeit erhalten und insbesondere Antiklebbeschichtungen mit

- 5 -

thermisch höher belasteten Auspuffflanschdichtungen hergestellt werden können, kann in der Auftragssuspension das Mineralöl ganz oder teilweise durch ein nicht reaktives Silikonöl mit einer Viskosität größer als 100 m Pa x s ausgetauscht sein. Mit höherem Silikonölanteil wird dabei die Dichtung temperaturbeständiger.

Im Sinne der Erfindung kann gegebenenfalls anstelle des PTFE-Pulvers ein anderes Pulver aus bevorzugt einem organischen Polymer mit vergleichsweise geringem Reibungskoeffizienten in der Suspension verwendet werden.

Durch die Erfindung ist somit eine Weichstoffflachdichtung mit sowohl guten Antiklebeigenschaften als auch einer guten Haftung der Beschichtung des Überzuges an der Dichtung geschaffen. Insbesondere wegen des vergleichsweise geringen Latexanteiles bleiben die Antiklebeigenschaften der Dichtung auch bei thermischen Belastungen erhalten und können durch Lagern der Dichtung beziehungsweise Alterung des Latexanteiles nur wenig beeinflußt werden. Die gute Bindung des Überzuges an der Dichtung erleichtert vorteilhaft ihre Handhabung, die Dichtungen sind sofort nach dem Auftrag der Suspension, ohne aneinander zu kleben, stapelbar, sie färben nicht ab, und sie erhalten ihre Antiklebeigenschaften auch nach längerem Lagern.

Die Überzüge sind darüberhinaus preisgünstig und einfach herzustellen. So sind die verwendeten Ausgangsmaterialien vergleichsweise kostengünstig, und die angesetzten Sus-

- 6 -

pensionen sind nach dem Ansatz längere Zeit haltbar und dadurch kostensparend in der Massenfertigung verarbeitbar.

Mit der folgenden Auftragssuspension wurden beispielsweise besonders gute Werte erzielt:

77,5 Gewichtsteile Mineralöl (Flammpunkt etwa 230°C)

1 Gewichtsteil eines wässrigen NBR-Latex (40 %-ig)

10 Gewichtsteile PTFE-Pulver (Korngröße größer als 5 μm

1 Gewichtsteil kationisches Tensid als Benetzungsmittel

0,5 Gewichtsteile Bentonit als Antiabsetzmittel

- 1 -

Patentansprüche:

1. Weichstoffflachdichtung, wie insbesondere eine Zylinderkopfdichtung, eine Auspuffflanschdichtung oder eine Nebendichtung für Verbrennungskraftmaschinen, bestehend aus einem gegebenenfalls metallisch verstärkten und imprägnierten Faservlies, mit einer ein- oder beidseitigen, ganz- oder teilflächigen Beschichtung aus einem das Kleben an den abgedichteten Flanschflächen verhindernden Material, dadurch gekennzeichnet, daß die Beschichtung aus einer Suspension mit

   69,5 bis 93 Gewichtsteilen Mineralölen
   (Flammpunkt größer als 230°C)
   0,5 bis 10 Gewichtsteilen eines wässrigen Latex
   0,5 bis  2 Gewichtsteilen eines Beneztungsmittels
   5    bis 20 Gewichtsteilen eines PTFE-Pulvers
   (Korngröße größer als 5 µm)

   besteht.

2. Weichstoffflachdichtung nach Anspruch 1, dadurch gekennzeichnet, daß die Beschichtung mit einem Flächengewicht von bis zu 200 g/m$^2$ aufgetragen ist.

3. Weichstoffflachdichtung nach mindestens einem der Ansprüche 1 und 2, dadurch gekennzeichnet, daß die Beschichtung bis zu 1 Gewichtsprozent eines Antiab-

0192042

- 2 -

setzmittels auf der Basis eines Schichtsilikats enthält.

4. Weichstoffflachdichtung nach mindestens einem der Ansprüche 1 bis 3, dadurch gekennzeichnet, daß das Mineralöl des Auftragsmaterials ganz oder teilweise durch ein nicht reaktives Silikonöl (Viskosität größer als 100 m Pa x s ersetzt ist.

5. Weichstoffflachdichtung nach mindestens einem der Ansprüche 1 bis 4, dadurch gekennzeichnet, daß die Beschichtung zusätzlich die Schnittflächen der Dichtung überdeckt.

6. Weichstoffflachdichtung nach mindestens einem der Ansprüche 1 bis 5, dadurch gekennzeichnet, daß die Beschichtung aus einer Suspension mit

77,5 Teilen Mineralöl (Flammpunkt größer als 230°C)
1 Teil NBR-Latex (40 %-ig)
10 Teilen PTFE-Pulver
1 Teil kationisches Tensid als Benetzungsmittel
0,5 Teilen Bentonit als Antiabsetzmittel

hergestellt ist.